# EUROPEAN PATENT SPECIFICATION

(11) **EP 0 546 681 B1**
(45) Date of publication and mention of the grant of the patent: **22.01.1997**
(21) Application number: 92310188.5
(22) Date of filing: 06.11.1992
(51) Int. Cl.: G09C 1/04, G06C 3/00

(54) **Information-encrypting and decrypting method**
Verfahren zum Chiffrieren und Dechiffrieren von Informationen
Méthode de chiffrage et de déchiffrage d'informations

(30) Priority: 08.11.1991 GB 9123797
(43) Date of publication of application: 16.06.1993
(73) Proprietor: THE MEGAPRINT GROUP LTD., Hampton, Middx, TW 12 1NL (GB)
(72) Inventor: Vlaar, Pieter A., 1811 GD Alkmaar (NL)
(74) Representative: Votier, Sidney David

(56) References cited:
- EP-A- 0 142 892
- EP-A- 0 243 651
- WO-A-86/00162

## Description

The present invention relates to a device and method for encrypting a series of characters, such as a number or a word, in such a way that they be easily deciphered using a simple code word.

Devices for displaying information, which take the shape of slides or discs are known. Typically such devices will comprise a movable element upon which information is printed, which is slidably or rotatably affixed to a cover element which comprises windows through which the information may be read. It is a useful feature of such devices that the particular positioning of windows will allow relevant items of information to be displayed simultaneously.

In a particular embodiment of such information discs or slides, the movable element may be printed with an index marker or a series of such markers which are alignable with markers on the cover element. Aligning two particular markers will lead to a specific item of information being displayed in a window of the cover element. For example, where the device is a bus routefinder, the alignment of markers representing the location of a traveller and his intended destination will cause a preferred bus route to be displayed in a window.

Such devices are well adapted for the selective presentation of prerecorded information. They are not suitable, however, for the recordal of information by the user. Furthermore, they are not suitable for the encrypting and deciphering of coded information by the user.

The storage and retrieval of information is becoming of increasing relevance in modern times. It is common for an individual to possess a device for recording information, such as a diary or a looseleaf file in which information may be written. A particular disadvantage of such devices, however, is that the information recorded therein is accessible to any person who should come into possession of the device. Sensitive information cannot therefore be recorded without running the risk that an unauthorised person may appropriate it. In particular, an individual may wish to record the identification numbers pertaining to the various credit and charge cards he possesses. Such identification numbers, known as PINs are essential if the card is to be used in automated bank tellers and cash machines, petrol pumps, telephones and the like. If the number is infrequently used, it may be necessary for the user to record it, since he may not be able to memorise it.

The banks who issue credit and charge cards and who indemnify their customers against abuse of these cards forbid customers to record PINs in a way which renders them accessible to an unauthorised person. Furthermore, some banks will refuse to indemnify customers if it can be proven that the PIN was so recorded.

Electronic diaries and pocket personal computers are known, some of which are capable of storing information in a protected manner, such that it can only be retrieved if a password is known. Such devices, however, are bulky, complex and expensive.

An alternative system for recording information in a protected manner is disclosed in EP-A- 0 243 651. The system comprises a personal encryption device and method, the device including a plurality of printed arrays of alpha numeric characters that are relatively positioned in correlated pairs or sets. The arrays of characters are shifted vertically in accordance with selected keys and the encryptor is adapted to establish the selected correlations between adjacent character arrays of each pair or set. The arrangement is such that each character in each first array of each pair or set of arrays is correlated to a character in an adjacent array of the pair or set, and by manipulating the encryptor a user may thereby provide a coded sequence of characters from a second array which corresponds to a sequence of characters chosen from a first array. The coded message may be deciphered by any person in possession of the encryptor.

There is therefore a need for a method of encoding information, in particular four-figure PINs, in such a manner that it is completely indecipherable to a person who is not in possession of a code. This need has been fulfilled by the present invention, in which the principles of the information slide or disc have been developed to allow the encrypting of a series of integers such as letters or numbers.

In a first aspect of the present invention, we provide a method for encrypting a sequence of characters using a disc or slide comprising a cover element having a plurality of windows including a first window and a second window, and a moveable element, the cover element being adapted to receive slidably the moveable element, characterised in that the cover element comprises a first set of characters disposed on the cover element adjacent to the first window and a grid having a plurality of user-markable grid positions, and the movable element comprises an index marker and a second set of characters disposed on the movable element such that the index marker and the second set of characters are viewable through the first and second windows respectively, the grid being disposed on the cover element such that each grid position aligns with a character of the second set of characters when viewed through the second window, which method comprises the steps of:
a) selecting a code sequence of characters from the first set of characters, said code sequence to be remembered by a user;
b) moving the movable element so as to align the index marker with the first character of the code sequence in the first window;
c) marking the grid at a grid position which is aligned with the first character of the sequence to be encrypted, which first character is viewable in the second window as one of the second set of characters;
d) repeating steps (b) and (c) in respect of second and/or further characters of the code sequence and the sequence to be encrypted.

It will be understood that a window may be formed in the cover element by any means. For example, a section at the edge of the element may simply be recessed, revealing the movable element beneath. Alternatively, a section of the cover element may be cut out and removed from the central region thereof, exposing the movable element.

If the invention is performed on a disc, the movable element may be affixed to the cover element in a central region thereof by means of a rivet or the like which extends coaxially through both elements. Preferably, however, the cover element will comprise an envelope which encloses the moveable element and supports it at its periphery, such that it is rotatable therein.

If the invention is performed on a slide, as is especially preferred, the cover element is preferably in the form of an open-ended envelope in which the movable element may slide. A preferred slide or disc for use with the present invention is described in European Patent 0 142 892, published on 29th May 1985.

Preferably, the slide will be of a similar length and width as a credit card, and advantageously as thin as possible.

Preferably, the first set of characters will comprise letters of an alphabet, while the second set of characters will comprise numerals. This arrangement is particularly preferred where the slide or disc is to be used for encrypting a credit or charge card PIN. Most preferably, the first set of characters will consist of the Roman alphabet A to Z inclusive, while the second set of characters will consist of arabic numerals from 0 to 9 inclusive.

Advantageously, the cover element is printed with more than one grid. Each grid allows a separate number to be encrypted. Preferably, the cover element comprises a flap upon which extra grids are printed. The grid will advantageously comprise ten subdivisions along a first axis which are alignable with the second set of characters printed on the moveable element. Preferably, the grid will further comprise four subdivisions along a second axis, which will allow a four-figure number to be encrypted. The number of subdivisions on the second axis corresponds directly to the number of figures in the number which can be encrypted. Where more than one grid is present, it will be understood that the subdivisions along each first axis on each grid will be alignable with the second set of characters.

In a second aspect of the invention, we provide a method of deciphering a sequence of characters characterised by the steps of:
a) remembering the code sequence of characters selected from the first set of characters;
b) moving the movable element so as to align the index marker with the first character of the remembered code sequence in the first window;
c) translating the position of a mark entered on the user-markable grid into an unencrypted character of the encrypted sequence by reading the character of the second set of characters which appears in the second window and which aligns with the marked grid position; and
d) repeating the steps (b) and (c) in respect of second and/or further characters of the code sequence until the encrypted sequence has been deciphered.

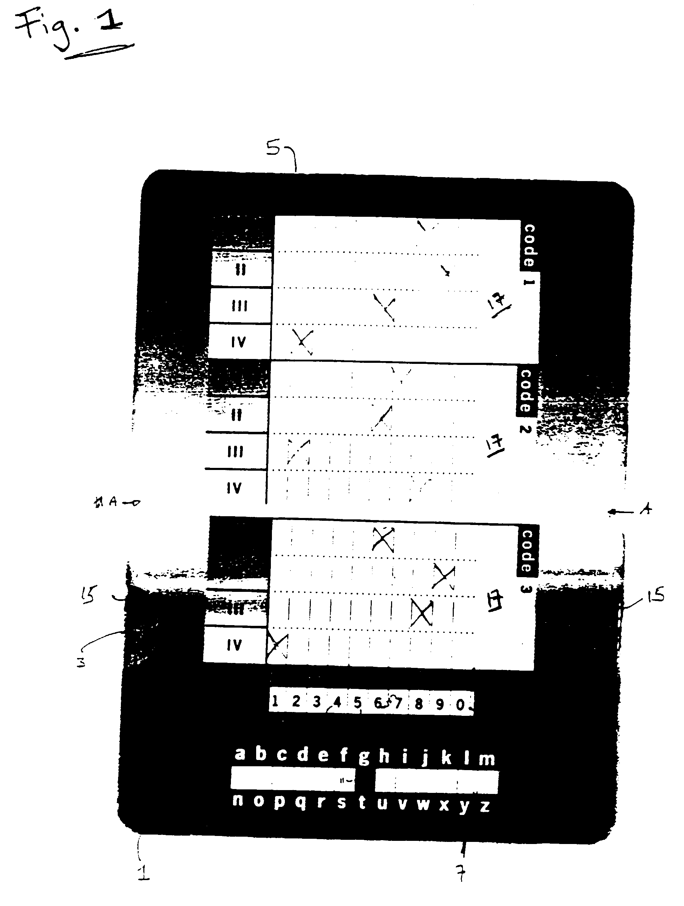

The invention will now be described, by way of example only, with reference to the following drawings of a slide for use in the method of the invention, in which:-
Figure 1 is a plan view of the slide;
Figure 2 is a plan view of the slide with the moveable element in a different position to that shown in Figure 1; and

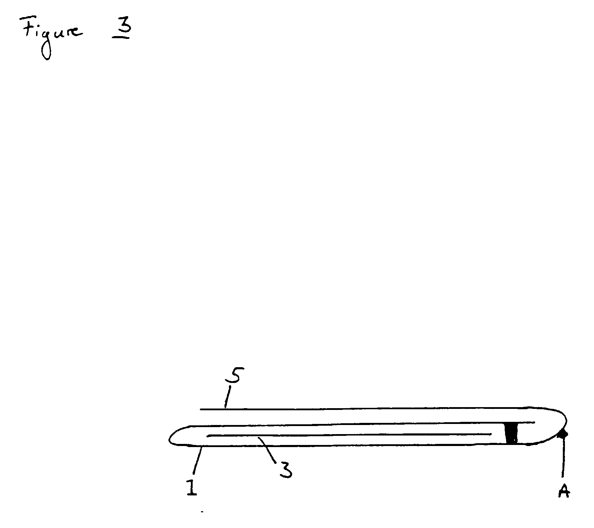

Figure 3 is a transverse sectional view of the slide of figure 1, folded along the line A-A.

Referring to the drawings the slide is comprised of an envelope 1 which contains a slidable card 3, and a flap 5. The flap 5 is foldable about axis A-A to overlap the envelope 1.

Envelope 1 is provided with windows 7 and 9, through which are visible index marker 11 and numerals 13 respectively, which are printed on the slidable card 3. Two recesses 15 in the envelope 1 allow slidable card 3 to be gripped and moved as required.

The envelope 1 and flap 5 are printed with grids 17, the columns of which are aligned with numerals 13. Each grid 17 has four rows, marked with Roman numerals I to IV.

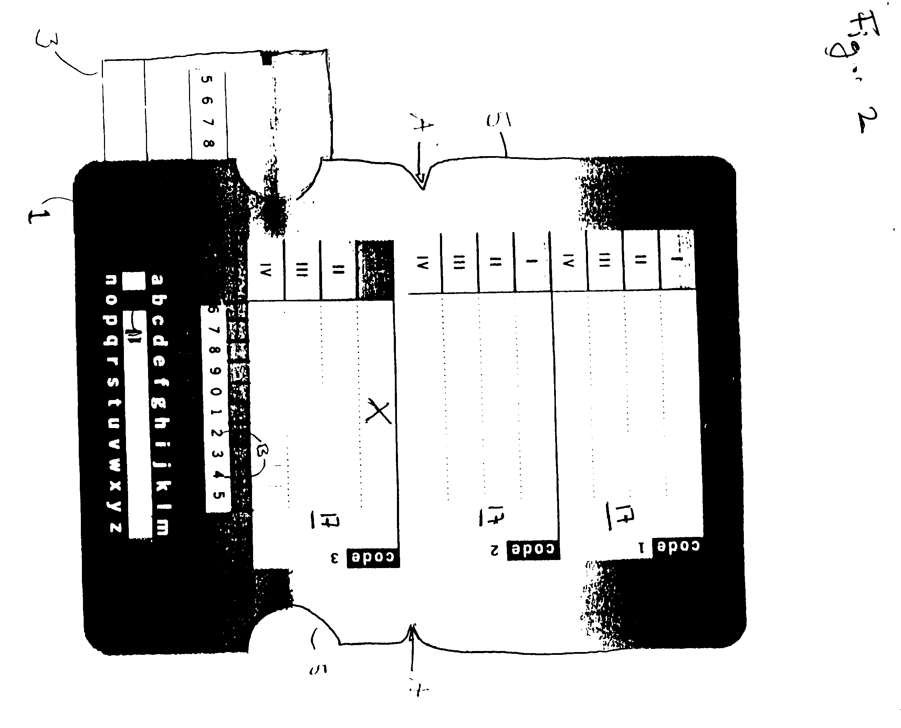

In order to encode a four-figure credit card PIN, a four-letter code word is first chosen, which can be easily remembered by the user. The slidable card 3 is then moved until the index marker 11 is adjacent to the first letter of the chosen code word. A mark is then entered on one grid in the row corresponding to the first figure of the number, which is marked I, in the column which is aligned with the first figure itself appearing in the numerals 13. For example, if the chosen code word is "BRIL" and the number to be encoded is 1166, a mark is entered in the row marked I and the column corresponding to the numeral 1 when the index marker is aligned with the letter B. This is shown in Figure 2. The procedure is then repeated for the remaining figures of the number, aligning the index marker with each successive letter of the code word and entering a mark in the appropriate row and column.

Second and third four-figure numbers can be encoded on the remaining grids, using the same code word.

In order to decode the encrypted number, one must remember the code word. The index marker is aligned with each successive letter thereof, and the digits of the encrypted number are read off the device according to the position of the marks entered on the grid relative to the numerals printed on the movable element and the roman numbers I to IV.

It will be understood that the invention is described above by way of example only, and that modifications of detail may be made within the scope of the invention.

## Claims

1. A method for encrypting a sequence of characters using a disc or slide comprising a cover element (1) having a plurality of windows (7, 9) including a first window (7) and a second window (9), and a moveable element (3), the cover element (1) being adapted to receive slidably the moveable element (3), characterised in that the cover element (1) comprises a first set of characters disposed on the cover element (1) adjacent to the first window (7) and a grid (17) having a plurality of user-markable grid positions, and the movable element (3) comprises an index marker (11) and a second set of characters (13)disposed on the movable element (3) such that the index marker (11) and the second set of characters (13) are viewable through the first and second windows (7, 9) respectively, the grid being disposed on the cover element (1) such that each grid position aligns with a character of the second set of characters (13) when viewed through the second window (9), which method comprises the steps of:
a) selecting a code sequence of characters from the first set of characters, said code sequence to be remembered by a user;
b) moving the movable element (3) so as to align the index marker with the first character of the code sequence in the first window (7);
c) marking the grid (17) at a grid position which is aligned with the first character of the sequence to be encrypted, which first character is viewable in the second window (9) as one of the second set of characters (13);
d) repeating steps (b) and (c) in respect of second and/or further characters of the code sequence and the sequence to be encrypted.

2. A method according to claim 1, characterised in that the first set of characters comprises letters of an alphabet and the second set of characters (13) comprises numerals.

3. A method according to claim 2, characterised in that the first set of characters consists of the letters A to Z of the Roman alphabet and the second set of characters (13) consists of the arabic numerals 0 to 9.

4. A method according to any preceding claim, characterised in that the user-markable grid (17) comprises ten subdivisions along a first axis, and four subdivisions along a second axis, thereby defining forty grid positions.

5. A method according to any preceding claim, characterised in that the provision of a plurality of user-markable grids (17) allows the encrypting of more than one sequence of characters.

6. A method according to any preceding claim characterised in that the code sequence is a code word and the sequence to be encrypted is a number.

7. A method of deciphering a sequence of characters encrypted by the method of any preceding claim characterised by the steps of:
a) remembering the code sequence of characters selected from the first set of characters;
b) moving the movable element (3) so as to align the index marker (11) with the first character of the remembered code sequence in the first window (7);
c) translating the position of a mark entered on the user-markable grid into an unencrypted character of the encrypted sequence by reading the character of the second set of characters (13) which appears in the second window (9) and which aligns with the marked grid position; and
d) repeating the steps (b) and (c) in respect of second and/or further characters of the code sequence until the encrypted sequence has been deciphered.

## Patentansprüche

1. Verfahren zum Chiffrieren einer Folge von Zeichen, das eine Scheibe oder einen Schieber verwendet, welche bzw. welcher ein Abdeckelement (1) mit einer Vielzahl von Fenstern (7, 9), die ein erstes Fenster (7) und ein zweites Fenster (9) umfassen, und ein bewegbares Element (3) umfaßt, wobei das Abdeckelement (1) angepaßt ist, das bewegbare Element (3) gleitbar aufzunehmen, dadurch gekennzeichnet, daß das Abdeckelement (1) einen ersten Satz von Zeichen, der an dem Abdeckelement (1) zu dem ersten Fenster (7) benachbart angeordnet ist, und ein Raster (17), das eine Vielzahl von Benutzer-markierbaren Rasterstellungen aufweist, umfaßt und das bewegbare Element (3) einen Indexmarkierer (11) und einen zweiten Satz von Zeichen (13), der an dem bewegbaren Element (3) derart angeordnet ist, daß der Indexmarkierer (11) und der zweite Satz von Zeichen (13) durch das erste bzw. zweite Fenster (7, 9) sichtbar sind, umfaßt, wobei das Raster an dem Abdeckelement (1) angeordnet ist, derart, daß sich jede Rasterstellung zu einem Zeichen des zweiten Satzes von Zeichen (13), wenn durch das zweite Fenster (9) gesehen, ausrichtet, wobei das Verfahren die Schritte umfaßt:
a) Auswählen einer Codefolge von Zeichen aus dem ersten Satz von Zeichen, wobei die Codefolge von einem Benutzer im Gedächtnis zu behalten ist;
b) Bewegen des bewegbaren Elementes (3), um so den Indexmarkierer zu dem ersten Zeichen der Code folge in dem ersten Fenster (7) auszurichten;
c) Markieren des Rasters (17) in einer Rasterstellung, die zu dem ersten Zeichen der zu chiffrierenden Folge ausgerichtet wird, wobei das erste Zeichen in dem zweiten Fenster (9) als eines des zweiten Satzes von Zeichen (13) sichtbar wird;
d) Wiederholen der Schritte (b) und (c) in bezug auf die zweiten und/oder weiteren Zeichen der Code folge und der zu chiffrierenden Folge.

2. Verfahren nach Anspruch 1, dadurch gekennzeichnet, daß der erste Satz von Zeichen Buchstaben eines Alphabetes umfaßt und der zweite Satz von Zeichen (13) Zahlen umfaßt.

3. Verfahren nach Anspruch 2, dadurch gekennzeichnet, daß der erste Satz von Zeichen aus den Buchstaben A bis Z des Römischen Alphabetes besteht und der zweite Satz von Zeichen (13) aus den arabischen Zahlen 0 bis 9 besteht.

4. Verfahren nach irgendeinem vorhergehenden Anspruch, dadurch gekennzeichnet, daß das Benutzer-markierbare Raster (17) zehn Unterteilungen längs einer ersten Achse und vier Unterteilungen längs einer zweiten Achse umfaßt, wodurch vierzig Rasterstellungen definiert werden.

5. Verfahren nach irgendeinem vorhergehenden Anspruch, dadurch gekennzeichnet, daß die Bereitstellung einer Vielzahl von Benutzer-markierbaren Rastern (17) das Chiffrieren von mehr als einer Folge von Zeichen ermöglicht.

6. Verfahren nach irgendeinem vorhergehenden Anspruch, dadurch gekennzeichnet, daß die Codefolge ein Codewort ist und die zu chiffrierende Folge eine Zahl ist.

7. Verfahren zum Dechiffrieren einer Folge von Zeichen, die durch das Verfahren nach irgendeinem vorhergenden Anspruch chiffriert sind, welches durch die Schritte charakterisiert ist:
a) Erinnern an die Codefolge von Zeichen, die aus dem ersten Satz von Zeichen ausgewählt ist;
b) Bewegen des bewegbaren Elements (3), um so den Indexmarkierer (11) zu dem ersten Zeichen der in Erinnerung gerufenen Codefolge in dem ersten Fenster (7) auszurichten;
c) Übertragen der Stellung einer auf dem Benutzer-markierbaren Raster eingegebenen Marke in ein unchiffriertes Zeichen der chiffrierten Folge durch Ablesen des Zeichens des zweiten Satzes von Zeichen (13), das in dem zweiten Fenster (9) erscheint und das sich zu der markierten Rasterstellung ausrichtet; und
d) Wiederholen der Schritte (b) und (c) in bezug auf die zweiten und/oder weiteren Zeichen der Codefolge, bis die chiffrierte Folge dechiffriert worden ist.

## Revendications

1. Méthode pour chiffrer une séquence de caractères en utilisant un disque ou élément coulissant, comprenant un élément de couverture (1) pourvu de plusieurs fenêtres (7, 9) incluant une première fenêtre (7) et une seconde fenêtre (9), et un élément mobile (3), l'élément de couverture (1) étant adapté pour recevoir l'élément mobile (3) de manière coulissante, caractérisée en ce que l'élément de couverture (1) comprend un premier ensemble de caractères disposés sur l'élément de couverture (1) de manière adjacente à la première fenêtre (7) et une grille (17) ayant plusieurs positions de grille pouvant être marquées par un utilisateur, et l'élément mobile (3) comprend une marque de repérage (11) et un second ensemble de caractères (13) disposés sur l'élément mobile (3) de telle sorte que la marque de repérage (11) et le second ensemble de caractères (13) soient visibles, respectivement, à travers les première et seconde fenêtres (7, 9), la grille étant située sur l'élément de couverture (1) de telle sorte que chaque position de grille soit alignée avec un caractère du second ensemble de caractères (13) lorsqu'il est vu à travers la seconde fenêtre (9), cette méthode comprenant les étapes consistant à :
a) sélectionner une séquence de caractères de code dans le premier ensemble de caractères, ladite séquence de code devant être mémorisée par un utilisateur;
b) déplacer l'élément mobile (3) de manière à aligner la marque de repérage avec le premier caractère de la séquence de code dans la première fenêtre (7);
c) marquer la grille (17) en une position de grille qui est alignée avec le premier caractère de la séquence à chiffrer, lequel premier caractère est visible dans la seconde fenêtre (9) en tant que l'un des caractères du second ensemble (13);
d) répéter les étapes (b) et (c) pour le second caractère et/ou les caractères suivants de la séquence de code et de la séquence à chiffrer.

2. Méthode selon la revendication 1, caractérisée en ce que le premier ensemble de caractères comprend des lettres d'un alphabet et le second ensemble de caractères (13) comprend des chiffres.

3. Méthode selon la revendication 2, caractérisée en ce que le premier ensemble de caractères est formé des lettres A à Z de l'alphabet romain et le second ensemble de caractères (13) est formé des chiffres arabes 0 à 9.

4. Méthode selon l'une quelconque des revendications précédentes, caractérisée en ce que la grille (17) pouvant être marquée par un utilisateur comprend dix subdivisions le long d'un premier axe et quatre subdivisions le long d'un second axe, définissant ainsi quarante positions de grille.

5. Méthode selon l'une quelconque des revendications précédentes, caractérisée en ce que le fait de prévoir plusieurs grilles (17) pouvant être marquées par un utilisateur permet de chiffrer plus d'une séquence de caractères.

6. Méthode selon l'une quelconque des revendications précédentes, caractérisée en ce que la séquence de code est un mot de code et la séquence à chiffrer est un nombre.

7. Méthode pour déchiffrer une séquence de caractères chiffrée par la méthode de l'une quelconque des revendications précédentes, caractérisée par les étapes consistant à :
a) se souvenir de la séquence de caractères de code sélectionnés dans le premier ensemble de caractères;
b) déplacer l'élément mobile (3) de manière à aligner la marque de repérage (11) avec le premier caractère de la séquence de code mémorisée dans la première fenêtre (7);
c) traduire la position d'une marque faite sur la grille pouvant être marquée par un utilisateur en un caractère non-chiffré de la séquence chiffrée en lisant le caractère du second ensemble de caractères (13) qui apparaît dans la seconde fenêtre (9) et qui est aligné avec la position de grille marquée; et
d) répéter les étapes (b) et (c) pour le second caractère et/ou les caractères suivants de la séquence de code jusqu'à ce que la séquence chiffrée ait été déchiffrée.
